# NEUE EUROPÄISCHE PATENTSCHRIFT

(11) **EP 0 681 932 B2**
(45) Veröffentlichungstag und Bekanntmachung des Hinweises auf die Entscheidung über den Einspruch: **16.07.2003**
(45) Hinweis auf die Patenterteilung: 12.08.1998
(21) Anmeldenummer: 94119797.2
(22) Anmeldetag: 15.12.1994
(51) Int. Cl.: B60G 21/05

(54) **Kraftfahrzeug-Hinterachse des Verbundlenkerachstyps**
Motor vehicle trailing arm twist axle beam rear suspension
Essieu arrière pour véhicule à moteur du type à bras tirés et traverse déformable

(30) Priorität: 13.05.1994 DE 4416725
(43) Veröffentlichungstag der Anmeldung: 15.11.1995
(73) Patentinhaber: ADAM OPEL AG, 65423 Rüsselsheim (DE)
(72) Erfinder: Graf, Gerhard, Dipl.-Ing. (TU), D-64569 Nauheim (DE); Schmidt, Rudolf, D-65428 Rüsselsheim (DE)

(56) Entgegenhaltungen:
- EP-A- 0 136 269
- EP-A- 0 229 576
- EP-A- 0 249 537
- EP-A- 0 458 665
- DE-A- 3 730 338
- FR-A- 2 481 198
- GB-A- 452 173
- US-A- 2 069 911

## Beschreibung

Die Erfindung betrifft eine Kraftfahrzeug-Hinter-achse des Verbundlenkerachstyps mit den Merkmalen des Oberbegriffs des Anspruches 1.

Derartige Kraftfahrzeug-Hinterachsen des Verbundlenkerachstyps weisen bei relativ einfacher Herstellung einen geringen Platzbedarf auf und können bei Kraftfahrzeugen mit verschiedenen Anforderungen an die Fahreigenschaften und an die Tragfähigkeit, wie diese unterschiedlich bei Familienlimousinen oder bei sportlich ausgerichteten Kraftfahrzeugen auftreten, eingebaut werden.

Die Fahreigenschaften und die Tragfähigkeit einer solchen Hinterachse hängen im wesentlichen von der Auswahl der die beiden Längslenker verbindenden Querstrebe ab, und zwar vom gewählten Querschnitt des Profils im Torsionsbereich, der in der Regel einen U-, V-, L-, X- oder ähnlichen Querschnitt aufweist. Dabei ist die räumliche Ausrichtung der einzelnen Profilschenkel des Querschnitts im Torsionsbereich, insbesondere die davon abhängige Lage des Schubmittelpunktes des Profils, maßgeblich für die Bestimmung der kinematischen Eigenschaften der Hinterachse, wie beispielsweise der Sturz- und Vorspuränderung bei wechselseitiger Einfederung oder des Eigenlenkverhaltens der Hinterachse bei Kurvenfahrten.

Bei einer Querstrebe beispielsweise mit einem V-förmigen Querschnitt liegt der Schubmittelpunkt etwa an der Spitze, wo sich die Mittellinien des Winkelprofils schneiden. Beim wechselseitigen Ein- oder Ausfedern bzw. in einer Kurvenfahrt schwenken die Räder (wie bei einer Schräglenkerachse) annähernd um eine Schwenkachse, die durch die Lageraugen der Längslenker am Aufbau und durch den Schubmittelpunkt des Profils etwa in der Mitte des Torsionsbereiches der Querstrebe verläuft.

Wenn man also bei einer derartigen Hinterachse des Verbundlenkerachstyps die Lage des Schubmittelpunktes ändert, beispielsweise durch axiales Verdrehen des Profils (vor dem Schweißen) etwas höher oder tiefer legt, so werden sich auch die kinematischen Eigenschaften, insbesondere das Eigenlenkverhalten der Hinterachse, bei Kurvenfahrten ändern.

Bei bekannten Kraftfahrzeug-Hinterachsen dieser Art ist eine Änderung der Lage des Schubmittelpunktes im Raum konstruktiv und fertigungstechnisch sehr aufwendig, da die Längslenker an den Verbindungsstellen eine bestimmte Form zur Verbindung mit der entsprechenden Querstrebe aufweisen müssen. Zusätzlich werden noch an den Verbindungsstellen speziell geformte Knoten- und Verstärkungsteile zur Erhöhung der Festigkeit und zum Abbau der Spannungsspitzen angeschweißt. Deswegen erfordert eine Veränderung der Lage des Schubmittelpunktes des Profils (axiale Verdrehung um einen bestimmten Winkel) immer eine neue konstruktive Lösung sowie einen neuen geschweißten Zusammenbau mit angepaßten Verstärkungsteilen.

Aus der 43 30 192 A1 ist eine Kraftfahrzeug-Hinterachse Verbundlenkerachstyps bekannt, bei der die radtragenden biegeund torsionssteifen Längslenker mittels einer biegesteifen, für Torsionsbeanspruchungen jedoch nachgiebigen Querstrebe miteinander verbunden sind. Diese Querstrebe weist über die gesamte Länge ein U-Profil auf, dessen Profilschenkel an beiden Enden der Querstrebe parallel zu den Wandbereichen der Längslenker verlaufen (mit der Symmetrieebene I). Dadurch kann die Querstrebe schweißtechnisch gut mit den Längslenkern verbunden werden.

Um dieser Hinterachse bestimmte kinematische Eigenschaften bezüglich der Sturz- und Vorspuränderung beim wechselseitigen Einfedern bzw. des Eigenlenkverhaltens zu verleihen, ist das U-Profil der Querstrebe im Torsionsbereich um einen bestimmten Winkel gegenüber der Lage des U-Profils an beiden Enden der Querstrebe (mit der Symmetrieebene 1) verdreht, wobei der Übergangsbereich zwischen den beiden Profilquerschnitten fließend verdrillt gestaltet ist.

Bei dieser Konstruktion sind die Längslenker speziell zur Verbindung mit dem U-Profil der Querstrebe ausgebildet. Dies hat jedoch den Nachteil, daß bei Verwendung einer anderen Querstrebe, die einen größeren Abstand zwischen den parallelen Profilschenkeln oder einen anderen Profilquerschnitt aufweist, die Längslenker, insbesondere deren Verbindungsstelle mit der Querstrebe, geändert und an die neue Querstrebe angepaßt werden müssen.

So ist beispielsweise der Einsatz eines verwölbungsarmen V-Profils aufgrund der geometrischen Form dieses Querschnitts problematisch, da sich die Verbindungsstellen mit den Längslenkern schweißtechnisch nicht mehr so günstig gestalten. Es können somit Festigkeitsprobleme an den Verbindungsstellen auftreten.

Aus der EP 0 458 665 A ist eine aus zwei Längslenkern und einer biegesteifen aber torsionsweichen Querstrebe bestehende Kraftfahrzeug-Hinterachse bekannt. Die Querstrebe ist im mittleren Bereich zu einem dreiarmigen Querschnitt verformt, um die nötige Torsionsweiche zu erzielen. An den mittleren Bereich schließen sich zu beiden Seiten geschwungene Bereiche an, an deren äußeren Enden jeweils eine Raddrehachse befestigt ist, die achsparallel zum mittleren torsionsweichen Bereich versetzt ist. Der Querträger kann je nach dem, ob es um eine tragende oder antreibende Achse handelt, jeweils so an die Längsträger angesetzt werden, daß der mittlere Bereich entweder vor oder hinter der Drehachse der Räder liegt. In welcher Weise der Querträger an den Längsträgern befestigt ist, ist in der Schrift nicht näher ausgeführt.

Die EP 0 229 576 A1 zeigt ebenfalls eine Kraftfahrzeug-Hinterachse mit einem im mittleren Bereich verformten Rohr, dessen Enden rechtwinklig abgewinkelt sind und an ihren Enden die Radachsen tragen. Die abgewinkelten Enden haben dabei die Funktion von Längsträgern. In Verlängerung des mittleren Bereiches sind auf beiden Seiten Achsstummel in nicht näher beschriebenen Weise befestigt, mit denen die Hinterachse verschwenkbar am Fahrzeugboden befestigt werden kann.

Aufgabe der Erfindung ist es, eine gattungsgemäß Kraftfahrzeug-Hinterachse Verbundlenkerachstyps zu schaffen, die bei reduziertem Fertigungsaufwand verschiedene Anforderungen bezüglich der damit erzielbaren Fahreigenschaften, insbesondere der Sturz- und Vorspuränderung beim wechselseitigen Einfedern und/oder des Eigenlenkverhaltens der Hinterachse bei Kurvenfahrten, erfüllen kann sowie eine höhere Haltbarkeit und Tragfähigkeit aufweist.

Gelöst wird diese Aufgabe dadurch, daß die Verbindungsstelle zwischen Längslenkern und der Querstrebe eine um die Längsachse der Querstrebe rotationssymmetrische Form aufweist, die ein Verdrehen der Querstrebe vor dem Schweißen der Verbindung gestattet. Durch diese rotationssymmetrische Form kann die Querstrebe vor dem Schweißen mit den Längslenkern beliebig verdreht werden, und zwar unabhängig von der Querschnittsform der Querstrebe im Torsionsbereich. Die Lage des Schubmittelpunktes im Torsionsbereich kann somit beliebig auch während der Serienproduktion verändert werden.

Zur Erzielung ausreichender Torsions- und Biegesteifigkeit können die Längslenker als Kastenprofil oder rohrförmig ausgebildet sein. Bei diesen Ausführungen kann die die beiden Längslenker verbindende Querstrebe (Rohrprofil) an den entsprechend ausgestalteten Verbindungsstellen direkt mit den Längslenkern verschweißt werden. Zur Herstellung dieser Längslenker eignet sich besonders das hydraulische Innenhochdruck-Umformverfahren, bei dem die Längslenker kostengünstig und gewichtsoptimiert aus Rohrmaterial gefertigt werden können.

Gemäß einer bevorzugten Ausführungsform sind die Längslenker als biege- und torsionssteife Gußteile ausgebildet. Dies ermöglicht, alle notwendigen Teile wie Radträgerplatte, Federsitz, Auge zur Befestigung des Stoßdämpfers, Fassung für die liegend oder stehend angeordnete Dämpfungsbuchse und andere Chassisteile im Längslenker zu integrieren. Zur Erhöhung der Festigkeit und/oder zur Reduzierung des Gewichtes können die Längslenker auch aus Stahl oder Leichtmetall gegossen werden.

Zur Verbindung mit der Querstrebe ist erfindungsgemäß an den Längslenkern jeweils ein Ansatz vorgesehen, der entsprechend der Form des Rohrprofilendes rund oder vieleckig ausgebildet werden kann. Eine besonders vorteilhafte Ausbildung besteht darin, daß der Ansatz rohrförmig ausgebildet ist und dessen Wandstärke an der Verbindungsstelle im Querschnitt etwa der Wandstärke des Rohrprofilendes entspricht. Diese Art der Ausbildung des Ansatzes eignet sich besonders zum Schweißen nach dem Magnet-ArcSchweißverfahren. Die dazu notwendige, etwa gleiche Wandstärke von Rohrprofilende und Ansatz kann entweder durch mechanische Nachbearbeitung des Ansatzes oder durch Verformung des Rohrprofilendes zu einer zum Schweißen geeigneten Wandstärke erreicht werden.

Alternativ zu dieser Ausführung kann der Außenumfang bzw. -durchmesser des Ansatzes gleich oder etwas kleiner als der Innenumfang bzw. -durchmesser des Rohrprofilendes ausgebildet sein. Zur Verbindung mit dem Längslenker kann das Rohrprofilende einfach über den Ansatz gesteckt und so exakt positioniert werden, bevor es an seiner Stirnseite mit dem Ansatz verschweißt wird.

Gemäß einer anderen Ausgestaltung der Verbindungsstelle ist der Ansatz mit einer Ausnehmung versehen, in die das Rohrprofilende gesteckt und an der Stirnseite des Ansatzes mit diesem verschweißt werden kann.

Die Tragfähigkeit der erfindungsgemäßen Hinterachse des Verbundlenkerachstyps kann relativ einfach erhöht werden, indem eine steifere Querstrebe mit einer im Torsionsbereich größeren Querschnittsfläche bzw. -form verwendet wird. Eine derartige Querstrebe kann nach bekannten Verfahren, beispielsweise nach dem Innenhochdruck-Umformverfahren, hergestellt werden. Dabei wird nur der Durchmesser des Rohrmaterials im Torsionsbereich vor der Verformung zum U-, V-, L-, X- oder ähnlichen Querschnitt erweitert. Damit kann ohne Veränderung der Verbindungsstellen zu den Längslenkern insbesondere die Stetigkeit und die Torsionsrate des Rohrprofils beeinflußt werden.

Zur gleichmäßigen Verteilung von auftretenden Kräften und Torsionsspannungen im Rohrprofil sind die Übergangsbereiche vom torsionssteifen zum torsionsweichen Querschnitt derart verformt, daß das Torsionswiderstandsmoment vom torsionssteifen zum torsionsweichen Querschnitt kontinuierlich abnimmt. Da das Torsionswiderstandsmoment von der Querschnittsfläche und -geometrie abhängt, kann durch fließende Verformung des Rohrprofils mit definierter Querschnittsveränderung ein derartiger Verlauf des Torsionswiderstandsmomentes in den Übergangsbereichen erreicht werden.

In Abhängigkeit von der Querschnittsgeometrie im Torsionsbereich kann das Rohrprofil in den Übergangsbereichen auch mit einem progressiv abfallenden Torsionswiderstandsmoment gestaltet werden. Diese vorteilhafte Ausführung ermöglicht, bei gleicher Länge der Querstrebe die Übergangsbereiche zu verkürzen.

Eine bevorzugte Ausführungsform der Kraftfahrzeug-Hinterachse des Verbundlenkerachstyps sieht vor, daß der Torsionsbereich der Querstrebe ein etwa nach vorn offenes V-förmiges Profil mit doppelwandigen Profilschenkeln aufweist, bei dem die Symmetrieebene auf die Fahrzeugabmessungen bezogen etwa schräg nach vorn unten gerichtet ist. Bei dieser Ausführung ist es sichergestellt, daß die freien Enden der Profilschenkel bei Einwirkung von Querkräften auf die Räder auf Zug beansprucht werden.

Die Herstellung des erfindugsgemäßen Rohrprofils ist relativ einfach und kostengünstig, da als Ausgangsmaterial ein gewöhnliches Rohr verwendet werden kann. Vor der Verformung werden in dieses Rohr spezielle Formstücke für den Torsionsbereich und die Übergangsbereiche eingelegt, um den gewünschten Profilquerschnitt zu erreichen. Danach kann mit einem entsprechenden Stempel das Rohr mechanisch auf den vorgegebenen Querschnitt geformt werden. Nach der Entfernung der Formstücke kann das Rohrprofil mit den Längslenkern in einer Schweißvorrichtung verschweißt werden.

Die Erfindung läßt zahlreiche Ausführungsformen zu. Zur weiteren Verdeutlichung ihres Grundprinzips sind einige davon in der Zeichnung dargestellt und nachfolgend beschrieben. Die Zeichnung zeigt in
- Fig. 1: eine perspektivische Ansicht einer erfindungsgemäßen Kraftfahrzeug-Hinterachse des Verbundlenkerachstyps bei der die radtragenden Längslenker mittels einer torsionsweichen Querstrebe aus Rohrprofil miteinander verbunden sind;
- Fig. 2: eine Draufsicht auf die linke Hälfte der Kraftfahrzeug-Hinterachse nach Fig. 1;
- Fig. 3: einen Schnitt gemäß Linie B-B in Fig. 2;
- Fig. 4: einen Schnitt gemäß Linie A-A in Fig. 2;
- Fig. 5: einen axialen Schnitt durch die Verbindungsstelle zwischen dem Längslenker und der Querstrebe nach Fig. 2;
- Fig. 6 bis Fig. 9: alternative Ausbildungen der Verbindungsstelle zwischen dem Längslenker und der Querstrebe;
- Fig. 10: einen axialen Schnitt durch die fertiggestellte Querstrebe 5 nach Fig.

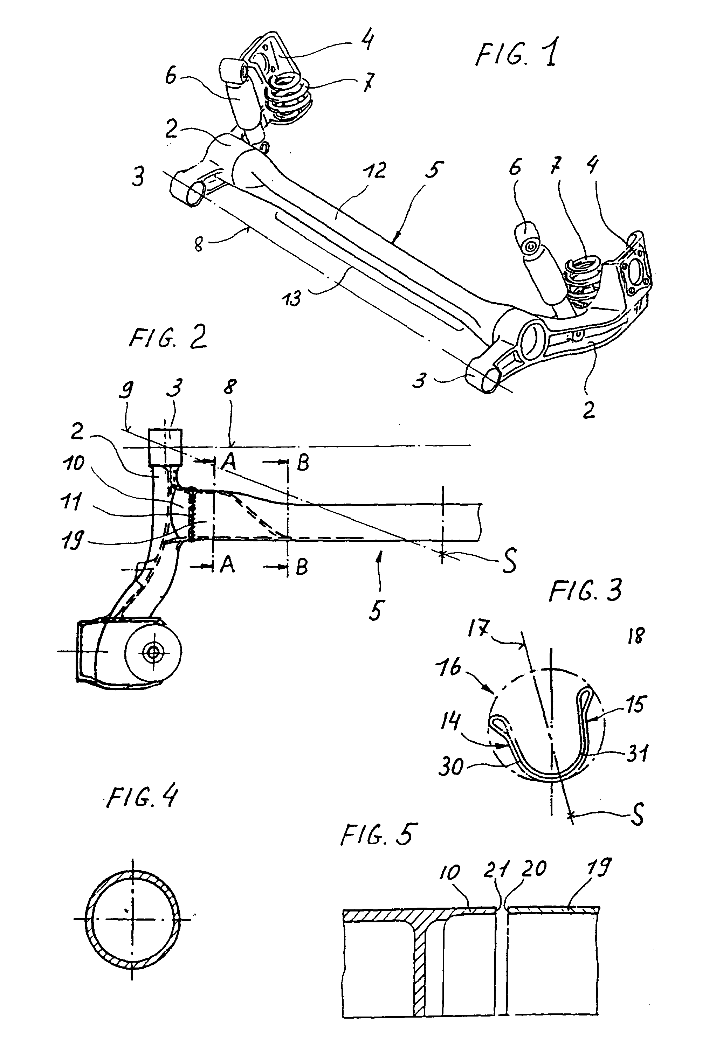

Die in Fig. 1 teilweise dargestellte KraftfahrzeugHinterachse des Verbundlenkerachstyps besteht im wesentlichen aus zwei radführenden Längslenkern 2 und einer die beiden Längslenker 2 verbindenden Querstrebe 5. Die Längslenker 2 sind als Gußteile ausgebildet und an ihrem vorderen Ende mit je einem Lagerauge 3 am nicht dargestellten Fahrzeugaufbau elastisch angelenkt. Mit 6 sind die Stoßdämpfer und mit 7 die Federn bezeichnet, die zwischen den Längslenkern 2 und dem Fahrzeugaufbau angeordnet sind. Am rückwärtigen Ende der Längslenker 2 sind Aufnahmen 4 zur Verbindung mit jeweils einem Radträger zur Lagerung eines Rades vorgesehen.

Die Querstrebe 5 besteht aus einem Rohrprofil 12, das in seinem mittleren Bereich, dem Torsionsbereich 13, zu einem torsionsweichen Querschnitt und an beiden Enden zu einem torsionssteifen Querschnitt verformt ist, wobei der Übergangsbereich vom torsionssteifen zum torsionsweichen Querschnitt (dem Bereich zwischen den Schnittführungen A-A und B-B in Fig. 2) fließend mit progressiv abfallenden Torsionswiderstandsmoment gestaltet ist. Wie in Fig. 3 gezeigt, weist der torsionsweiche Querschnitt ein nach vorn offenes V-förmiges Profil 16 mit doppelwandigen Schenkeln 14, 15 auf, bei dem die Symmetrieebene 17 auf die Fahrzeugabmessungen bezogen schräg nach vorn unten gerichtet ist. Der Schubmittelpunkt dieses Profils liegt auf der Symmetrieebene 17 etwa in dem mit S bezeichneten Punkt. Mit 18 ist etwa der Außenumfang am Ende des Rohrprofils 12 angedeutet.

Zur Verbindung mit der Querstrebe 5 ist am Längslenker 2 ein Ansatz 10 vorgesehen, der, wie in Fig. 2 gezeigt, an der Verbindungsstelle 11 mit einem Ende der Querstrebe 5 nach dem Magnet-Arc-Schweißverfahren verschweißt ist. Dazu weist die Querstrebe 5 an der Verbindungsstelle 11 einen torsionssteifen kreisrunden Querschnitt (Fig. 4) auf. Der Ansatz 10 ist auch entsprechend kreisrund und rohrförmig ausgebildet. Dessen Wandstärke entspricht an der Verbindungsstelle 11 etwa der Wandstärke des Rohrprofils 12 in diesem Bereich.

Bei gleichzeitiger Einfederung der Räder schwenken beide Längslenker 2 um die Schwenkachse 8, die durch die beiden Lageraugen 3 quer zur Fahrtrichtung verläuft. Bei wechselseitigem Einfedern der Räder schwenken die Längslenker 2, wie in Fig. 2 gezeigt, um eine Schwenkachse 9, die etwa durch die Lageraugen 3 der Längslenker 2 am Aufbau und durch den Schubmittelpunkt S des Profils etwa in der Mitte des Torsionsbereiches 13 der Querstrebe 5 verläuft.

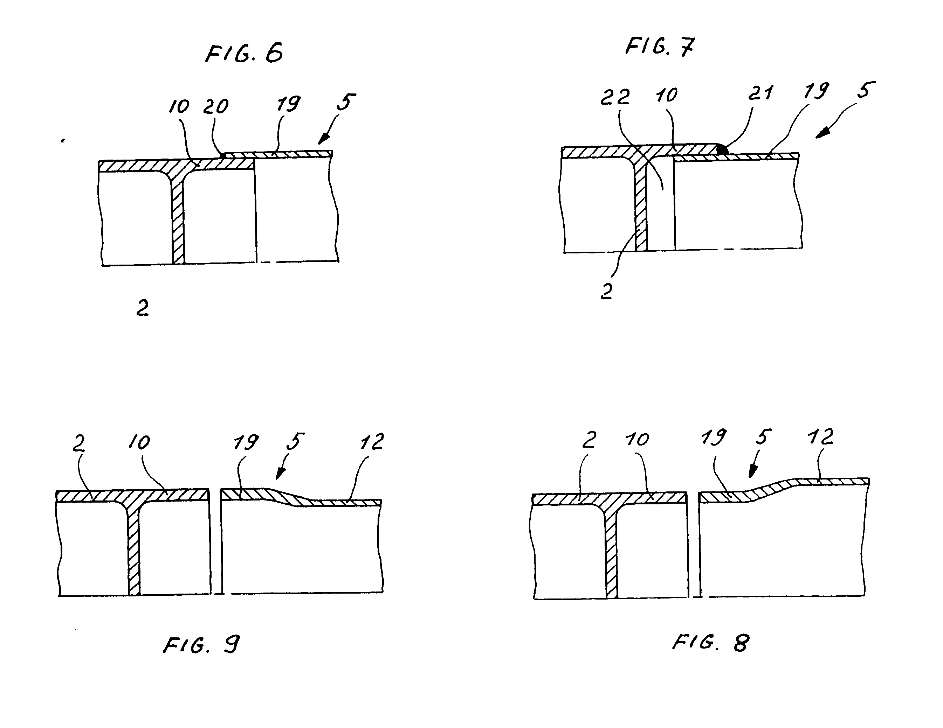

Die Verbindungsstelle 11 zwischen der Querstrebe 5 und den Längslenkern 2 kann unterschiedlich ausgeführt sein. Die Fig. 5 zeigt einen axialen Schnitt durch die Verbindungsstelle 11, deren Querschnitt eine rotationssymmetrische Form aufweist. Dabei entspricht der Durchmesser und die Wandstärke des Rohrprofilendes 19 etwa dem Durchmesser und der Wandstärke des Ansatzes 10, so daß beide Teile 10, 19 in einer nicht dargestellten Schweißvorrichtung, welche die Querstrebe 5 drehbar aufnehmen kann, an den Stirnseiten 20, 21 nach dem Magnet-Arc-Schweißverfahren verschweißt werden können. Dabei ist die Wandstärke des Ansatzes 10 an der Verbindungsstelle 11 durch mechanische Bearbeitung an die Wandstärke des Rohrprofilendes 19 angepaßt.

In Fig. 6 ist eine alternative Ausbildung der Verbindungsstelle dargestellt, bei welcher der Innendurchmesser des Rohrprofilendes 19 gleich oder geringfügig größer als der Außendurchmesser des Ansatzes 10 ausgebildet ist. Zur Verbindung von Ansatz 10 und Rohrprofilende 19 wird das Rohrprofilende 19 über den Ansatz 10 gesteckt und an der Stirnseite 20 mit dem Ansatz 10 nach bekannten Schweißverfahren verschweißt.

Bei der Ausbildung der Verbindungsstelle 11 nach Fig. 7 ist am Ansatz 10 eine kreisrunde Ausnehmung 22 vorgesehen, deren Innendurchmesser etwa gleich oder geringfügig größer als der Außendurchmesser des Rohrprofilendes 19 ausgebildet ist. Zur Verbindung der beiden Teile 10, 19 wird das Rohrprofilende 19 in die Ausnehmung 22 gesteckt und an der Stirnseite 21 mit dem Ansatz 10 verschweißt. Bei dieser Ausführung kann die Ausnehmung 22 auch direkt am Längslenker 2 angeordnet sein.

Um die Steifigkeit der Querstrebe 5 zu erhöhen, kann gemäß Fig. 8 der Durchmesser des Rohrprofils 12 im Torsionsbereich 13 vor der Verformung zum V-förmigen Profil 16 größer als der Durchmesser am Rohrprofilende 19 gestaltet sein. In Fig. 8 ist der Längslenker 2 mit dem Ansatz 10 nur zum Vergleich der Durchmesser an der Verbindungstelle 11 dargestellt. Bei dieser Ausführung ist die Wandstärke des Rohrprofilendes 19 nach an sich bekannten Herstellungsverfahren, beispielsweise durch Stauchung der Länge des Rohrprofils 12, an die Wandstärke des Ansatzes 10 angepaßt.

Alternativ zu der Ausbildung der Querstrebe 5 nach Fig. 8 kann, wie die Fig. 9 zeigt, der Durchmesser des Rohrprofils 12 im Torsionsbereich 13 vor der Verformung zum V-förmigen Profil 16 kleiner als der Durchmesser am Rohrprofilende 19 gestaltet sein. Diese Ausbildung kann dann erforderlich sein, wenn die Torsionssteifigkeit im Torsionsbereich 13 reduziert oder die Steifigkeit des Rohrprofilendes 19 im Bereich der Verbindungsstelle 11 gesteigert werden soll.

Die nach Fig. 8 und 9 ausgebildeten Querstreben 5 können selbstverständlich entsprechend den in Fig. 6 oder 7 gezeigten Ausführungen der Verbindsungsstelle 11 mit dem Längslenker 2 verbunden werden.

Bei den Verbindungsstellen 11 bzw. den Querstreben 5, die nach Fig. 1 bis 9 gestaltet sind, können die Querstreben 5 zur Veränderung der Lage des Schubmittelpunktes S vor dem Schweißen mit den Längslenkern 2 beliebig axial verdreht werden.

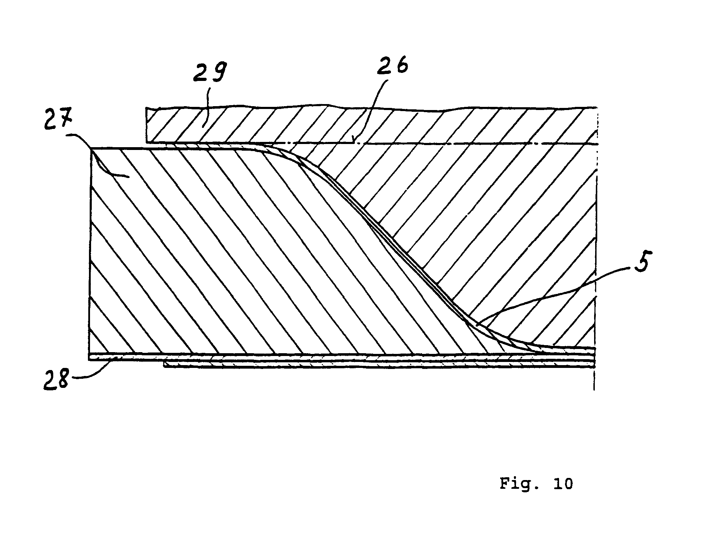

Zur Herstellung der aus einem Rohrprofil 12 bestehenden Querstrebe 5, die nach Fig. 1 bis 9 gestaltet sein kann, kann beispielsweise ein kreisrundes Rohr 26 verwendet werden, das in Fig. 10 strichpunktiert angedeutet ist. Vor der Verformung zum U-, V-, L-, X- oder ähnlichen Querschnitt können in das Rohr 26 an beiden Enden spezielle Formstücke 27 für die Übergangsbereiche vom torsionssteifen zum torsionsweichen Querschnitt und, falls erforderlich, in den Torsionsbereich 13 ein spezielles Formstück 28 eingelegt werden, die entsprechend der gewünschten Profilform in den Übergangs- und Torsionsbereichen ausgebildet sind. Das Formstück 28 wird dann benötigt, wenn zur Erhöhung der Stetigkeit und/oder Verminderung der Reibung und Geräusche die einzelnen Profilschenkel 14, 15 der Querstrebe 5 mit einem Spalt zwischen den Wänden 30, 31 (Fig. 3) ausgebildet werden sollen.

Mit einem als "Negativ" zu der gewünschten Profilform ausgebildeten Stempel 29 kann schließlich das Rohr 26 zu der vorgegebenen Profilform geformt werden.

## Patentansprüche

1. Kraftfahrzeug-Hinterachse des Verbundlenkerachstyps mit zwei radtragenden elastisch am Aufbau angelenkten starren Längslenkern (2), die um zumindest eine quer zur Fahrtrichtung angeordnete Schwenkachse schwingen und mittels einer parallel und beabstandet zur Schwenkachse angeordneten biegesteifen aber torsionsweichen Querstrebe (5) miteinander verschweißt sind, die über die gesamte Länge aus einem Rohrprofil (12) besteht, das an beiden Enden einen torsionssteifen Querschnitt und im mittleren Bereich einen torsionsweichen U-, V-, L-, X- oder ähnlichen Querschnitt mit mindestens einem doppelwandigen Profilschenkel (14, 15) aufweist, wobei der Übergangsbereich vom torsionssteifen zum torsionsweichen Querschnitt fließend gestaltet ist, wobei die Verbindungsstelle (11) zwischen Längslenkern (2) und der Querstrebe (5) eine um die Längsachse der Querstrebe rotationssymmetrische Form aufweist, die ein Verdrehen der Querstrebe (5) vor dem Schweißen der Verbindung gestattet.

2. Kraftfahrzeug-Hinterachse nach Anspruch 1, **dadurch gekennzeichnet, daß** die Längslenker (2) als biege- und torsionssteife Gußteile ausgebildet sind und jeweils einen Ansatz (10) zur Verbindung mit einem Ende der Querstrebe (5) aufweisen.

3. Kraftfahrzeug-Hinterachse nach Anspruch 2, **dadurch gekennzeichnet, daß** der Ansatz (10) im Querschnitt rund oder vieleckig ausgebildet ist.

4. Kraftfahrzeug-Hinterachse nach Anspruch 3, **dadurch gekennzeichnet, daß** der Ansatz (10) rohrförmig ausgebildet ist und seine Wandstärke an der Verbindungsstelle (11) etwa gleich der Wandstärke des Rohrprofilendes (19) ist und daß der Ansatz (10) mit dem Rohrprofilende (19) nach dem Magnet-Arc-Schweißverfahren verschweißt ist.

5. Kraftfahrzeug-Hinterachse nach Anspruch 3, **dadurch gekennzeichnet, daß** zur Verbindung mit dem Längslenker (2) das Rohrprofilende (19) über den Ansatz (10) gesteckt und an der Stirnseite (20) des Rohrprofils (12) mit dem Ansatz (10) verschweißt ist.

6. Kraftfahrzeug-Hinterachse nach Anspruch 3, **dadurch gekennzeichnet, daß** zur Verbindung mit dem Längslenker (2) das Rohrprofilende (19) in eine Ausnehmung (22) im Ansatz (10) gesteckt und an der Stirnseite (21) des Ansatzes (10) mit diesem verschweißt ist.

7. Kraftfahrzeug-Hinterachse nach einem der Ansprüche 1 bis 6, **dadurch gekennzeichnet, daß** die Wandstärke des Rohrprofils (12) an beiden Enden im Vergleich zu der Wandstärke im Torsionsbereich (13) durch Verformung vergrößert ist.

8. Kraftfahrzeug-Hinterachse nach einem der Ansprüche 1 bis 7, **dadurch gekennzeichnet, daß** das Rohrprofil (12) im Torsionsbereich (13) vor der Verformung zu einem U-, V-, L-, X- oder ähnlichen Querschnitt einen größeren Durchmesser als an beiden Enden aufweist.

9. Kraftfahrzeug-Hinterachse nach einem der Ansprüche 1 bis 8, **dadurch gekennzeichnet, daß** das Rohrprofil (12) im Torsionsbereich (13) vor der Verformung zu einem U-, V-, L-, X- oder ähnlichen Querschnitt einen geringeren Durchmesser als an beiden Enden aufweist.

10. Kraftfahrzeug-Hinterachse nach einem der Ansprüche 1 bis 9, **dadurch gekennzeichnet, daß** das Rohrprofil (12) an den Übergangsbereichen vom torsionssteifen zum torsionsweichen Querschnitt derart verformt ist, daß das Torsionswiderstandsmoment vom torsionssteifen zum torsionsweichen Querschnitt progressiv abnimmt.

## Claims

1. Motor vehicle rear axle of the twist-beam rear axle type with two wheel-carrying rigid longitudinal control arms (2) which are resiliently linked to the body and which oscillate about at least one pivot axis arranged transversely to the direction of travel and are welded together by means of a bending-resistant but torsionally soft cross strut (5) which is arranged parallel to and spaced apart from the pivot axis and which over the whole length consists of a tubular profile (12) which at both ends has a torsionally rigid cross-section and in the central region a torsionally soft U, V, L, X or the like cross-section with at least one double-walled profile arm (14, 15), the transition region from the torsionally rigid to the torsionally soft cross-section being of smooth construction, wherein the junction (11) between longitudinal control arms (2) and the cross strut (5) has a shape which is rotationally symmetrical about the longitudinal axis of the cross strut and which allows rotation of the cross strut (5) before welding the joint.

2. Motor vehicle rear axle according to claim 1, **characterised in that** the longitudinal control arms (2) are constructed as bending-resistant and torsionally rigid castings and each comprise an attachment (10) for connection to one end of the cross strut (5).

3. Motor vehicle rear axle according to claim 2, **characterised in that** the attachment (10) is round or polygonal in cross-section.

4. Motor vehicle rear axle according to claim 3, **characterised in that** the attachment (10) is of tubular construction and its wall thickness at the junction (11) is approximately equal to the wall thickness of the tubular profile end (19) and **in that** the attachment (10) is welded to the tubular profile end (19) by the magnetic arc welding method.

5. Motor vehicle rear axle according to claim 3, **characterised in that** for connection to the longitudinal control arm (2) the tubular profile end (19) is fitted over the attachment (10) and at the end face (20) of the tubular profile (12) is welded to the attachment (10).

6. Motor vehicle rear axle according to claim 3, **characterised in that** for connection to the longitudinal control arm (2) the tubular profile end (19) is fitted in a recess (22) in the attachment (10) and at the end face (21) of the attachment (10) is welded to the latter.

7. Motor vehicle rear axle according to any of claims 1 to 6, **characterised in that** the wall thickness of the tubular profile (12) at both ends in comparison with the wall thickness in the torsion region (13) is increased by deformation.

8. Motor vehicle rear axle according to any of claims 1 to 7, **characterised in that** the tubular profile (12) in the torsion region (13) before deformation into a U, V, L, X or the like cross-section has a larger diameter than at both ends.

9. Motor vehicle rear axle according to any of claims 1 to 8, **characterised in that** the tubular profile (12) in the torsion region (13) before deformation into a U, V, L, X or the like cross-section has a smaller diameter than at both ends.

10. Motor vehicle rear axle according to any of claims 1 to 9, **characterised in that** the tubular profile (12) in the transition regions from the torsionally rigid to the torsionally soft cross-section is deformed in such a way that the moment of torsion resistance decreases progressively from the torsionally rigid to the torsionally soft cross-section.

## Revendications

1. Essieu arrière de véhicule automobile du type à effet auto-directionnel, comportant deux bras oscillants longitudinaux rigides (2) portant les roues, articulés élastiquement sur la structure, qui oscillent autour d'au moins un axe d'oscillation disposé transversalement à la direction de déplacement et sont liés l'un à l'autre par soudure par l'intermédiaire d'une poutre transversale (5) rigide en flexion mais souple en torsion disposée parallèlement à l'axe d'oscillation, à distance de celui-ci, laquelle poutre transversale est formée sur toute sa longueur d'un profilé tubulaire (12) qui présente à ses deux extrémités une section rigide en torsion et dans sa partie médiane une section souple en torsion en forme de U, de V, de L, de X ou de forme similaire avec au moins une aile de profilé (14, 15) à paroi double, la zone de raccordement entre la section rigide en torsion et la zone souple en torsion étant progressive, le point de liaison (11) entre les bras oscillants longitudinaux (2) et la poutre transversale (5) présentant une forme symétrique de rotation par rapport à l'axe longitudinal de la poutre transversale, qui autorise une rotation de la poutre transversale (5) avant le soudage de la liaison.

2. Essieu arrière de véhicule automobile selon la revendication 1, **caractérisé par le fait que** les bras oscillants longitudinaux (2) sont réalisés sous la forme de pièces moulées rigides en flexion et en torsion et présentent chacun un embout (10) pour la liaison avec une extrémité de la poutre transversale (5).

3. Essieu arrière de véhicule automobile selon la revendication 2, **caractérisé par le fait que** l'embout (10) en section transversale, présente une conformation ronde ou polygonale.

4. Essieu arrière de véhicule automobile selon la revendication 3, **caractérisé par le fait que** l'embout (10) présente une conformation tubulaire et que son épaisseur de paroi au niveau du point de liaison (11) est sensiblement égale à l'épaisseur de paroi de l'extrémité de profilé tubulaire (19) et **par le fait que** l'embout (10) est soudé à l'extrémité de profilé tubulaire (19) selon le procédé "magnétarc".

5. Essieu arrière de véhicule automobile selon la revendication 3, **caractérisé par le fait que** pour la liaison avec le bras oscillant longitu 1. dinal (2), on enfile l'extrémité de profilé tubulaire (19) sur l'embout (10) et on soude le côté frontal (20) du profilé tubulaire (12) à l'embout (10).

6. Essieu arrière de véhicule automobile selon la revendication 3, **caractérisé par le fait que** pour la liaison avec le bras oscillant longitudinal (2) on enfile l'extrémité de profilé tubulaire (19) dans un évidement (22) dans l'embout (10) et on le soude à l'embout (10) au niveau de la face frontale (21) de l'embout (10).

7. Essieu arrière de véhicule automobile selon une des revendications 1 à 6, **caractérisé par le fait que** l'épaisseur de paroi du profilé tubulaire (12), aux deux extrémités, est augmentée par déformation par rapport à l'épaisseur de paroi dans la zone de torsion (13).

8. Essieu arrière de véhicule automobile selon une des revendications 1 à 7, **caractérisé par le fait que** le profilé tubulaire (12), dans la zone de torsion (13), avant le formage destiné à lui conférer une section en forme de U, de V, de L, de X ou une section similaire, présente un diamètre plus grand qu'aux deux extrémités.

9. Essieu arrière de véhicule automobile selon une des revendications 1 à 8, **caractérisé par le fait que** le profilé tubulaire (12), dans la zone de torsion (13), avant le formage destiné à lui conférer une section en forme de U, de V, de L, de X ou une section similaire, présente un diamètre plus faible qu'aux deux extrémités.

10. Essieu arrière de véhicule automobile selon une des revendications 1 à 9, **caractérisé par le fait que** le profilé tubulaire (12), dans les zones de raccordement entre la section rigide en torsion et la section souple en torsion est conformé de telle sorte que le moment résistant en torsion diminue progressivement à partir de la section rigide en torsion en direction de la section souple en torsion.
